# FASCICULE DE BREVET EUROPEEN

(11) **EP 1 327 393 B1**
(45) Date de publication et mention de la délivrance du brevet: **21.03.2007**
(21) Numéro de dépôt: 03290074.8
(22) Date de dépôt: 13.01.2003
(51) Int. Cl.: A23N 15/00

(54) **Procédé et installation pour la préparation de têtes de salade**
Verfahren und Anlage für die Zubereitung von Salatköpfen
Process and installation for preparation of heads of lettuce

(30) Priorité: 15.01.2002 FR 0200421
(43) Date de publication de la demande: 16.07.2003
(73) Titulaire: FLORETTE, Société par actions simplifiée, 50430 Lessay (FR)
(72) Inventeur: Beaumont, Laurent, 50590 Regneville sur Mer (FR)
(74) Mandataire: Cabinet HERRBURGER

(56) Documents cités:
- EP-A- 0 419 349
- US-A- 3 382 901
- US-A- 3 396 766
- US-A- 4 241 096

## Description

La présente invention concerne un procédé et une installation de préparation de têtes de salade à feuilles enveloppantes et imbriquées du type « iceberg » ou de végétaux de structure, c'est-à-dire dont les feuilles sont enveloppantes et imbriquées.

On connaît déjà (FR 89 12 414), une machine pour éplucher des salades, c'est-à-dire enlever les feuilles périphériques pour récupérer la tête de salade destinée à être conditionnée à l'état découpé, pour la préparation de salades en sachets.

Ce procédé convient parfaitement pour tous les types de salades dont les feuilles périphériques, qu'il faut enlever, sont divergentes.

Après avoir fixé la tête de salade sur un support, celui-ci fait circuler la tête de salade devant des couteaux qui coupent les feuilles à leur base, et elles tombent d'elles-mêmes sans nécessiter d'intervention manuelle.

Or, ce procédé et cette machine connus ne conviennent pas pour certains types de salades connues sous la dénomination « iceberg» et qui ont des feuilles enveloppantes et imbriquées.

En effet, même si les feuilles extérieures sont coupées, comme cela est connu, à leur base, leur caractère enveloppant et imbriqué les retient sur la tête de salade et nécessite une intervention manuelle pour être enlevées.

La présente invention a pour but de développer un procédé et une installation permettant de préparer des têtes de salade ou autres végétaux à feuilles enveloppantes et imbriquées, comme des salades « iceberg» pour permettre la découpe de salades prêtes à l'emploi.

A cet effet, l'invention concerne un procédé caractérisé en ce qu'
- on sectionne la base des côtes des feuilles extérieures de la tête,
- on entaille le dessus des feuilles extérieures,
- on détache les côtes et les morceaux des feuilles extérieures ainsi coupées, et
- on découpe le trognon pour récupérer la partie centrale consommable.

Cette double opération de sectionnement et d'entaillage d'abord de la base des feuilles puis de leur dessus ou de leur partie intermédiaire ou plan équatorial (opération faite dans un ordre quelconque, éventuellement simultanément) libère les feuilles de la couche périphérique et suivant le cas leur permettent de se détacher d'elles-mêmes ou de pouvoir se détacher facilement par simple frottement ou action de doigts ou d'organes similaires ou de jet d'air, qui s'accrochent aux feuilles périphériques et les détachent de la partie centrale de la tête de salade, pour ne laisser que la partie consommable.

Le sectionnement de la base des feuilles extérieures de la couche périphérique se fait dans une direction sensiblement radiale à travers la ou les côtes des feuilles. L'entaille du sommet des feuilles ou du milieu ou du dessus de celles-ci se fait dans une direction sensiblement radiale et non pas tangente. Cette entaille, même si elle atteint les feuilles de la partie consommable de la tête qui se trouve en dessous, du fait du rapprochement et de l'imbrication des feuilles de ce type de salade ou de végétal, ne gêne pas la suite des opérations et surtout ne détache pas les feuilles de la partie consommable puisque celles-ci ne sont pas sectionnées à leur base. En effet, au niveau de la base, on dispose d'une distance de sécurité beaucoup plus grande qu'au niveau du dessus de la salade à cause de l'épaisseur des nervures réparties le long du trognon.

L'entaille du dessus des feuilles extérieures permet de réaliser des lambeaux de feuilles, qui même s'ils restent en partie accrochés les uns aux autres, seront facilement détachés et surtout ouvriront la coquille formée par l'imbrication des feuilles de la couche périphérique.

De façon avantageuse, on fait tourner la tête de salade par rapport aux couteaux pour couper la base des feuilles extérieures et le dessus des feuilles périphériques.

Après avoir préparé la tête pour en enlever les feuilles périphériques non consommables, on coupe le trognon en évidant la tête. Le trognon reste accroché au support et la partie utilisable de la tête s'en dégage.

De façon avantageuse, on détache les lambeaux de feuilles entaillées et les côtes coupées, par un moyen mécanique ou, de préférence, par soufflage. Le jet de soufflage est avantageusement dirigé sur la tête à préparer, près des organes de découpe de manière à gonfler les parties de feuilles en même temps qu'elles sont coupées.

Cette opération d'enlèvement des côtes et des morceaux de feuilles ou lambeaux peut également se faire après avoir réalisé les incisions et les coupes.

Dans le cas de têtes de salade ayant des côtes rosies, il est intéressant d'enlever d'abord les côtes et feuilles extérieures puis de sectionner la tête ainsi débarrassée pour en détacher la partie principale et ne laisser qu'une calotte autour du trognon, suivant la base des côtes de la nouvelle couche de feuilles extérieures puis de sectionner ces côtes et de les détacher de la calotte. La calotte peut ensuite être préparée comme la partie centrale consommable qui n'aurait pas subi cette coupe, et la partie utile de la calotte est récupérée.

Les parties utiles de la tête, soit la partie utile entière soit la partie principale et la calotte, sont ensuite coupées pour donner des morceaux de salade.

De façon avantageuse, les différentes opérations de coupe et de sectionnement des feuilles périphériques et du trognon se font en position suspendue, la tête étant accrochée et tenue à un support qui la tient par le trognon pendant les différentes opérations.

L'invention concerne également une installation pour la mise en oeuvre du procédé. Cette installation, destinée à la préparation de têtes de salade à feuilles enveloppantes et imbriquées de type salade « iceberg » ou de végétaux ayant une structure analogue, comporte des supports pour recevoir chacun une tête de salade à préparer et la transporter à travers les différents postes de travail. Cette installation est caractérisée en ce qu'elle comprend
- un poste de découpe de la base des côtes des feuilles extérieures équipé d'un couteau devant lequel passe le support muni de la tête de salade,
- un poste de découpe du dessus des feuilles extérieures équipé d'un couteau pour inciser le dessus des feuilles extérieures,
- un poste d'enlèvement pour enlever les feuilles coupées devant lesquelles passe la tête portée par le support,
- un poste de découpe du trognon équipé d'un couteau qui évide la tête autour du trognon pour en détacher la tête et retenir le trognon.

Suivant une autre caractéristique, l'installation comporte un dispositif à jet d'air, notamment une soufflette pour enlever les feuilles coupées.

Suivant une autre caractéristique, l'installation comporte un poste de coupe ou de sectionnement transversal pour couper la tête suivant un plan méridional ou, généralement perpendiculaire à l'axe de la tête de salade, ce poste étant prévu en aval du poste d'enlèvement des feuilles extérieures.

Cette installation permet un traitement totalement automatique des têtes de salade entre la mise en place et l'obtention de la tête séparée de son trognon, prête à être découpée et conditionnée.

Les couteaux de découpe de la base et du haut des feuilles périphériques sont de préférence des disques rotatifs devant lesquels on fait passer les têtes de salade en faisant tourner celles-ci autour de leur axe.

Suivant une autre caractéristique, le poste de découpe du trognon est équipé d'un couteau à lame pointue. Après la venue en position de la tête de salade portée par son support et dégagée des feuilles périphériques, ce couteau plonge dans la salade au niveau du trognon pendant que la tête de salade effectue un mouvement de rotation ce qui sépare le trognon et la tête de salade.

Suivant une autre caractéristique avantageuse, l'installation comprend
- un tourniquet
   * muni d'organes de fixation de têtes à préparer, répartis à la périphérie,
   * tournant devant des postes de travail équipés des organes de découpe et d'enlèvement des côtes et feuilles,
- des réceptacles pour
   * les déchets à évacuer,
   * les parties bonnes à récupérer.

De manière avantageuse, les têtes de salade sont transportées en position suspendue à leur support de sorte qu'après la découpe du trognon, la tête, détachée, tombe pour être récupérée et le trognon reste accroché au support pour être évacué.

La présente invention sera décrite ci-après de manière plus détaillée à l'aide d'un exemple de réalisation du procédé et de l'installation représentée schématiquement dans les dessins annexés dans lesquels :
- la figure 1 montre les différentes étapes du procédé de l'invention,
- la figure 2 montre schématiquement une installation de préparation de têtes de salade de type « iceberg» selon l'invention,
- la figure 2a montre une variante de couteau pour l'incision des feuilles extérieures.

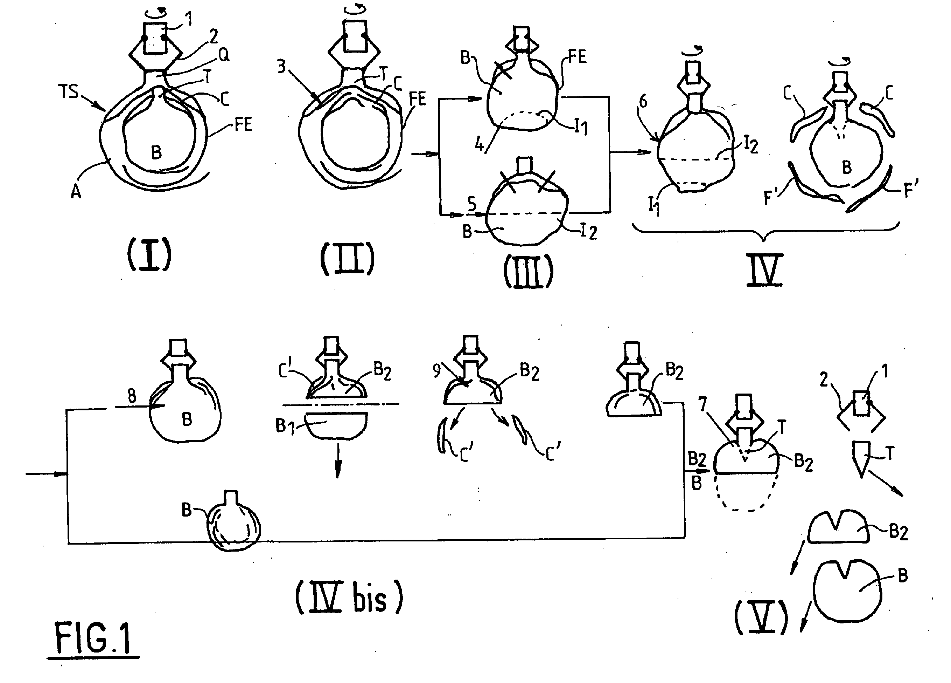

Selon la figure 1, l'invention concerne un procédé de préparation des têtes de salade à feuilles enveloppantes et imbriquées. Ce type de salade connu sous le nom de salade « iceberg », pour des raisons de tenue au froid, est une variété de salade très résistante et très utilisée dans de nombreux pays.

Une telle tête de salade TS se compose d'une partie principale A attachée à un trognon T qui se termine à l'extrémité de l'enveloppe de la partie A par une queue Q.

La partie principale est en forme de boule entourée par des feuilles extérieures FE attachées à la queue Q ou au trognon T par des côtes C.

Les feuilles extérieures FE comme les autres feuilles d'ailleurs sont enveloppantes et imbriquées en une ou plusieurs couches.

Les feuilles extérieures FE constituent la protection de la partie principale A. Elles-mêmes ne sont pas propres à la consommation et doivent être enlevées pour ne laisser que la partie centrale B, consommable de la salade.

Cette préparation de la partie consommable (B) de la salade sera décrite ci-après à l'aide des différentes opérations.

Au cours d'une première opération (I), on fixe la tête de salade TS à un support 1 à l'aide de moyens de fixation non détaillés mais se composant très schématiquement de griffes 2 qui se plantent dans la queue Q. La tête est ainsi accrochée au support 1 pour être transportée à travers les différents postes de travail, le cas échéant en étant entraînée en rotation autour de son axe.

Dans les différentes parties de la figure 1, la tête de salade TS est représentée en position suspendue au support 1. Cette position n'est pas nécessairement verticale. Elle peut être inclinée vers l'extérieur, suivant l'installation munie du support 1. Il est toutefois intéressant que la tête TS se trouve à un niveau en dessous du support 1, en position verticale ou plus ou moins inclinée, pour permettre aux différentes parties de tomber.

Après cette mise en place de la tête TS sur le support 1, au cours d'une seconde opération (II), on sectionne les côtes C des feuilles extérieures FE par une coupe circulaire qui tranche les côtes à leur base près de la queue Q. Cette coupe circulaire par rapport à l'axe ZZ de la tête TS est obtenue par un mouvement de rotation relative entre un couteau 3 et la tête TS. Dans ce mouvement de rotation relative, il est avantageux de faire tourner la tête TS devant le couteau 3.

Après avoir réalisé ce sectionnement à la base des côtes C, on entaille le dessus des feuilles extérieures selon un ou plusieurs lignes circulaires en faisant des incisions I1, I2 (III). Ces incisions peuvent être faites près du sommet des feuilles extérieures ou selon un plan équatorial avec un couteau 5, réalisant les incisions I1 ou I2.

Lorsque l'incision est faite près du sommet de la salade, il est également possible de faire une incision radiale par plusieurs traces et non pas une incision périphérique comme l'incision I2.

Après avoir incisé les feuilles extérieures et coupé la base des côtes, on soumet la tête TS à un jet d'air comprimé 6 dirigé au niveau de l'une ou l'autre des incisions, à la base des côtes ou suivant l'incision I2 du plan équatorial ou l'incision I1 près de la tête pour souffler les lambeaux de feuilles et des côtes F', C et les détacher de la partie B. Cette action du jet 6 peut se faire de préférence en combinaison avec la rotation de la tête TS autour de son axe.

Les trois opérations (II) ; (III) ; (IV) présentées ici successivement peuvent également être combinées en une seule opération, la découpe avec le couteau 3 pour la coupe des côtes C, l'incision avec le couteau 4 au sommet de la tête ou avec le couteau 5 dans le plan équatorial et l'action du jet 6 peuvent être faites simultanément ; la buse émettant le jet d'air comprimé 6 est par exemple juxtaposée au couteau 4 ou au couteau 5 de façon à décoller les lambeaux F' des feuilles extérieures et des côtes C au fur et à mesure de la progression de l'incision ou des incisions.

Après cette étape (IV), la partie centrale B de la tête de salade reste accrochée au support 1.

Dans la majorité des cas, cette partie centrale est utilisable telle quelle et pour cela, dans une dernière étape (V), on entaille la tête à l'aide d'un couteau 7 qui incise le long du trognon T, pour séparer celui-ci de la partie centrale B. celle-ci se détache du trognon et à la fin de cette opération, on évacue le trognon T en ouvrant les griffes 2 du support 1.

Au cas où la partie B obtenue à la fin de l'opération d'enlèvement des feuilles extérieures (IV) n'est pas utilisable telle quelle parce que les côtes de la seconde couche de feuilles sont rosies, il faut effectuer une opération intermédiaire correspondant à l'étape (IV bis).

Pour cela, on sectionne la partie centrale B avec un couteau 8 pour en détacher la partie principale B1 et ne laisser accrochée au support 1 que la calotte B2 entourant le trognon et correspondant à la base des côtes C' de la nouvelle couche de feuilles extérieures. Ces côtes C' seront sectionnées dans une nouvelle étape comme l'ont été les côtes C, à l'aide d'un couteau 9, par rotation relative entre la calotte B2 et le ou les couteaux 9. Les côtes C se détachent et on obtient la calotte B2.

Cette calotte B2 sera alors détachée de son trognon T comme l'a été la partie B venant directement de l'étape IV. Ces deux opérations similaires, sont effectuées avec le même couteau 7.

Simplement à la fin de cette opération (V), au lieu de recueillir la partie B, on ne recueille que la calotte B2, la partie principale B1 ayant déjà été récupérée au cours de l'étape (IV bis).

Le détachement des côtes rosies C' qui fait l'objet de l'étape (IV bis) est commandé par une décision globale en fonction du lot de têtes de salade TS. En effet, les côtes intérieures C', celles de la seconde couche de feuilles, ne rosissent pas individuellement. Ce phénomène est lié à des problèmes de culture et de stockage, ne se produit pas isolément sur une tête de temps à autre mais ce phénomène affecte tout un lot. Dans ces conditions, avant de préparer un lot de têtes de salade, on détermine les opérations à effectuer sur le lot, soit l'enlèvement seulement des feuilles extérieures de la première couche soit celui des feuilles de la première couche et celles de la seconde couche avec découpe d'une calotte.

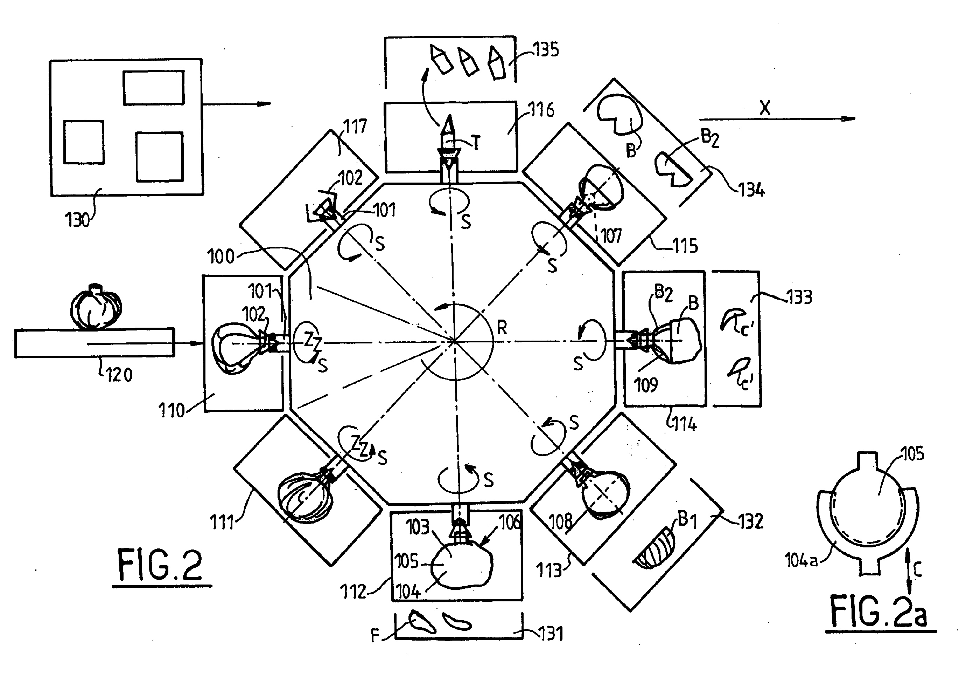

La figure 2 montre un mode de réalisation d'une installation pour la mise en oeuvre du procédé décrit ci-dessus. L'installation se compose d'un tourniquet 100 dont la périphérie est équipée de supports 101 munis d'une broche et de moyens de fixation en forme de griffes 102 s'ouvrant et se fermant mécaniquement.

La mise en place d'une tête de salade se fait par simple embrochage manuel de la tête sur une broche non représentée solidaire du support ; à ce moment, les griffes 102 sont ouvertes. Puis, le tourniquet ayant quitté le poste de mise en place 110, les griffes 102 se referment sur la queue de la tête de salade pour la tenir fermement pour les opérations suivantes. Les griffes ne s'ouvriront que pour lâcher le trognon découpé de la tête de salade en fin d'opération.

Le tourniquet 100 comporte, dans cet exemple, huit équipements ainsi formés chacun d'un support 101 et de griffes 102. Le tourniquet fait passer successivement les équipements chargés d'une tête de salade, par rotation (flèche R) pas à pas ou en continu dans les différents postes de travail 110-117 dans lesquels s'effectuent les opérations de préparation de la tête de salade.

Les supports 101 sont entraînés en rotation autour de leur axe ZZ soit systématiquement pendant toute la rotation du tourniquet soit seulement dans les postes nécessitant une rotation relative (flèche S). Cette mise en rotation peut se faire par un pignon porté par le support 101 et engrénant avec une couronne dentée ou par un entraînement associé à chaque poste et produisant une rotation déterminée en fonction de l'opération à effectuer. Ces différents moyens mécaniques ne sont pas détaillés.

De même l'équipement du poste peut être neutralisé en fonction de la succession des opérations à effectuer sur les têtes de salade.

L'ensemble de l'installation se commande à partir d'un tableau de commande 130 permettant notamment de paramétrer les opérations à effectuer.

Les supports 101 sont portés par le tourniquet 100 avec leur axe ZZ vertical ou de préférence incliné vers le bas, de sorte que les têtes de salade TS soient accrochées en position suspendue. Cela simplifie les opérations et, en particulier, cela permet aux lambeaux et aux morceaux de côtes coupées, ainsi qu'aux parties consommables B, B1, B2 de se détacher simplement et de tomber dans des réceptacles ou sur des bandes transporteuses pour être évacués.

Les postes 110-117 seront décrits de manière plus détaillée ci-après.

Le poste d'alimentation 110 permet de placer les têtes de salade TS sur le support 101. Les salades sont fournies en paniers ou par un convoyeur 120. Un agent les place une à une sur le support 101 qui fonctionne, de préférence, de manière automatique ; les griffes 102 se referment sur la queue de la tête de salade TS dès que la queue est poussée contre le support 101. Les griffes 102 sont orientées de manière que la tête de salade ne risque pas de se détacher pendant sa rotation, entraînée par le support, sous l'effet des actions extérieures et notamment des couteaux.

Le second poste 111 est neutre dans l'installation représentée. Il peut recevoir des outils actuellement regroupés dans l'un ou l'autre des postes en aval tel que le poste 112.

Le poste 112 assure le sectionnement des côtes des feuilles extérieures FE à leur base, près de la queue de la tête de salade, à l'aide d'un couteau 103. Un autre couteau 104 réalise l'incision I1 des feuilles extérieures près du sommet de la tête de salade et/ou une incision I2 au milieu des feuilles extérieures, sensiblement selon un plan équatorial, avec un couteau 105. Les couteaux 103, 104, 105 sont, de préférence, fixes. Il s'agit par exemple de disques rotatifs devant lesquels tourne chaque tête TS entraînée par son support 101.

Une autre variante consiste à utiliser un seul couteau assurant la fonction des trois couteaux 103, 104, 105 et prenant successivement la place de ces couteaux 103, 104, 105. En général, il suffit de l'une seulement des deux incisions I1, I2 qui ne sont pas nécessaires simultanément toutes les deux.

Selon une autre variante (figure 2a), le couteau 104a pour le sectionnement ou l'incision des feuilles extérieures a une forme en U venant inciser les feuilles extérieures selon un plan « diamétral » passant par « l'axe» de la tête (double flèche C). Le tranchant du couteau est représenté par un trait incliné pénétrant dans le contour de la tête 105. Le moyen d'actionnement du couteau 104a n'est pas représenté. Il peut s'agir d'un moyen d'actionnement, par exemple, pneumatique.

Le poste 112 est aussi équipé d'un dispositif 106 pour détacher les côtes coupées et les lambeaux de feuilles extérieures. Cet organe 106 est un ou plusieurs doigts, élastiques, contre lesquels frottent les feuilles extérieures pendant la rotation de la tête après incision. Ce dispositif 106 est toutefois, de préférence, une soufflette envoyant un jet d'air. Bien que pour des raisons de place sur la figure 2, cette soufflette 106 soit représentée à droite, séparément des couteaux 103-105, il est préférable de la positionner directement à côté de l'un des couteaux pour bénéficier de l'ouverture réalisée par le couteau dans l'enveloppe formée par les feuilles extérieures et de soulever ainsi les feuilles coupées au fur et à mesure de la progression de l'incision pour les détacher. Les morceaux détachés tombent dans un réceptacle 131.

Comme indiqué, le couteau 103 peut être installé dans le poste 111 pour réaliser la coupe des côtes alors que les feuilles extérieures FE seront entaillées suivant l'entaille I1 ou I2 dans le poste 112 et l'ensemble de la couche de feuilles extérieures, les côtes coupées comprises, étant détaché alors dans le poste 112.

Le poste 113 effectue la coupe de la partie B libérée des feuilles extérieures pour en séparer la partie principale B1 à l'aide d'un couteau 108. La partie principale B1 est recueillie dans un réceptacle 132 alors que la partie B2 ou calotte, avec la queue reste accrochée à son support. Ce poste n'est utilisé que si la tête de salade TS a des côtes rosies.

Le poste 114 fait suit au poste 113 pour le traitement des têtes de salade nécessitant l'enlèvement des côtes rosies. Le poste 114 comporte un couteau 109 qui coupe les côtes rosies près de leur base. Comme la partie B2 est enlevée, les côtes coupées C' se détachent facilement de la partie B2 (calotte) fixée par la queue. Cette calotte reste accrochée au support 101.

La partie B2 de la tête tourne devant le couteau 109 Les côtes coupées C' tombent dans un réceptacle 133.

Le poste 115 reçoit soit la partie centrale B, entière qui aura traversé les postes 113, 114 neutralisés, soit la partie B2, débarrassée des côtes rosies. Le poste 115 comporte un couteau à lame pointue muni d'un moyen d'actionnement pour plonger dans la base de la partie B ou B2 pendant que celle-ci tourne, pour en détacher cette partie B ou B2 du trognon T. La partie B ou B2 tombe alors dans le réceptacle 134 alors que le trognon reste accroché aux griffes 102 du support 101.

Le poste 116 sert à évacuer le trognon T par l'ouverture commandée des griffes 102 du support 101. Le trognon tombe dans le réceptacle 135.

Le poste 117 est libre. Comme indiqué ci-dessus il peut être utilisé si les outils des autres postes en amont sont répartis différemment.

Les parties B, B1, B2 recueillies, constituent les parties utiles de la tête de salade. Elles sont ensuite coupées dans une installation non représentée (évacuation suivant la flèche X).

Comme déjà indiqué, le tourniquet 100 tourne de manière continue, suffisamment lentement pour que le chargement manuel puisse se faire dans le poste 110, les différentes opérations de coupe dans les postes 112, 113, 114, 115 se faisant pendant la rotation du tourniquet 100 et celle des supports 101 avec les têtes de salade passant devant les couteaux 103-109 eux-mêmes rotatifs le cas échéant.

## Revendications

1. Procédé de préparation de têtes de salade à feuilles enveloppantes et imbriquées de type « iceberg », ou de végétaux de structure analogue,
**caractérisé en ce qu'**
- on sectionne (II) la base des côtes (C) des feuilles extérieures (FE) de la tête (TS),
- on entaille (III) le dessus des feuilles extérieures (FE),
- on détache (IV) les côtes et les morceaux (F') des feuilles extérieures (FE) ainsi coupées, et
- on découpe (V) le trognon (TS) pour récupérer la partie centrale consommable (B, B₁, B₂).

2. Procédé selon la revendication 1,
**caractérisé en ce qu'**
on entaille (III, I₂) le dessus des feuilles extérieures (FE) sensiblement dans un plan équatorial.

3. Procédé selon la revendication 1,
**caractérisé en ce qu'**
on entaille (III, I₁) le dessus des feuilles extérieures (FE) près du sommet de la tête (TS).

4. Procédé selon la revendication 1,
**caractérisé en ce qu'**
on détache (IV) les côtes et les morceaux de feuilles extérieures (C, F') en soufflant (6) sur la tête (TS).

5. Procédé selon la revendication 1,
**caractérisé en ce qu'**
on fait tourner la tête à préparer (TS), devant des organes de découpe (3, 4, 5, 8, 9) et de soufflage (6).

6. Procédé selon la revendication 5,
**caractérisé en ce qu'**
on sectionne la base des côtes des feuilles extérieures (FE) et on entaille le dessus des feuilles tout en soufflant (6) sur la tête (B) au cours d'une même opération.

7. Procédé selon la revendication 1,
**caractérisé en ce qu'**
on prépare les têtes (TS) en position suspendue.

8. Procédé selon la revendication 1,
**caractérisé en ce qu'**
après enlèvement des côtes (C) et des feuilles extérieures (FE) et avant la découpe du trognon (T),
- on sectionne la tête pour en détacher la partie principale (B₁) et laisser une calotte (B₂) autour du trognon (T) suivant la base des côtes (C') de la nouvelle couche de feuilles extérieures,
- on sectionne ces côtes (C') et on les détache de la calotte (B₂).

9. Procédé selon la revendication 1,
**caractérisé en ce qu'**
on découpe les trognons (T) en évidant la partie centrale (B) ou la calotte (B₂) autour du trognon.

10. Installation pour la préparation de têtes de salade à feuilles enveloppantes et imbriquées de type « iceberg » ou de végétaux de structure analogue, pour la mise en oeuvre du procédé selon l'une quelconque des revendications 1 à 9,
comprenant des supports pour recevoir les têtes de salade à préparer et les transporter à travers les différents postes de travail,
**caractérisée en ce qu'elle comprend**
- un poste de découpe (112) de la base des côtes des feuilles extérieures équipé d'un couteau (103) devant lequel passe le support muni de la tête de salade,
- un poste de découpe (112) du dessus des feuilles extérieures équipé d'un couteau pour inciser le dessus des feuilles extérieures,
- un poste d'enlèvement pour enlever les feuilles coupées devant lesquelles passe la tête portée par le support,
- un poste de découpe du trognon équipé d'un couteau qui évide la tête (TS) autour du trognon (T) pour en détacher la tête et retenir le trognon.

11. Installation selon la revendication 10,
**caractérisée en ce qu'**
elle comprend
- un poste (113) de sectionnement transversal de la partie (B) de la tête séparée des feuilles extérieures (FE) pour en couper la partie principale (B) et ne laisser sur le support (101) que la calotte (B2) avec les côtes rosies,
- un poste (114) pour la coupe de côtes rosies.

12. Installation selon la revendication 10,
**caractérisée en ce qu'**
elle comporte un dispositif à jet d'air (106) pour enlever les feuilles coupées.

13. Installation selon la revendication 10,
**caractérisée en ce qu'**elle comprend
les couteaux de découpe (103, 109) de la base des côtes des feuilles extérieures, ceux (104, 105) de découpe des feuilles extérieures et celui (109) de découpe de la calotte (B2) sont des disques rotatifs.

14. Installation selon la revendication 10,
**caractérisée en ce que**
le postes de coupe (113, 114) sont munis de couteaux (103-109) en position fixe et le support (101) avec la tête de salade tourne devant les couteaux.

15. Installation selon la revendication 10,
**caractérisée en ce que**
le poste de découpe du trognon (115) comporte un couteau (107) à lame pointue, commandé en translation pour plonger dans la tête de salade autour du trognon et un moyen d'entraînement en rotation faisant tourner la tête par rapport au couteau.

16. Installation selon la revendication 10,
**caractérisée en ce qu'**
elle comprend
- un tourniquet (100)
* muni d'organes de fixation de têtes à préparer (101, 102), répartis à la périphérie,
* tournant devant des postes de travail (110-117) équipés des organes de découpe et d'enlèvement des côtes et feuilles (103-109),
- des réceptacles (131-135) pour
* les déchets (F, C') à évacuer,
* les parties bonnes (B1, B2, B3) à récupérer.

17. Installation selon la revendication 10,
**caractérisée en ce qu'**
elle comprend un couteau (104a) d'incision des feuilles extérieures, en forme de U.

## Claims

1. Method of preparing lettuce heads of the iceberg type with tightly packed and overlapping leaves or vegetables of a similar structure,
**characterised in that**
- the base of the sides (C) of the outer leaves (FE) is severed (II) from the head (TS),
- the top of the outer leaves (FE) is sliced (III),
- the sides and the shreds (F') of outer leaves (FE) thus cut are detached (IV), and
- the stalk (TS) is cut off (V) in order to recover the central, edible part (B, B₁ B₂).

2. Method as claimed in claim 1,
**characterised in that**
the top of the outer leaves (FE) is sliced (III, I₂) essentially in an equatorial plane.

3. Method as claimed in claim 1,
**characterised in that**
the top of the outer leaves (FE) is sliced (III, I₁) close to the tip of the head (TS).

4. Method as claimed in claim 1,
**characterised in that**
the sides and the shreds of outer leaves (C, F') are detached (IV) by blowing (6) on the head (TS).

5. Method as claimed in claim 1,
**characterised in that**
the head (TS) to be prepared is rotated in front of the cutting (3, 4, 5, 8, 9) and blowing (6) elements.

6. Method as claimed in claim 5,
**characterised in that**
the base of the sides of the outer leaves (FE) is severed and the top of the leaves is sliced whilst blowing (6) onto the head (B) during a same operation.

7. Method as claimed in claim 1,
**characterised in that**
the heads (TS) are prepared in a suspended position.

8. Method as claimed in claim 1,
**characterised in that**
after the sides (C) and outer leaves (FE) have been removed and before cutting off the stalk (T),
- the head is severed in order to detach the main part (B₁) from it, leaving a heart (B₂) around the stalk (T) following the base of the sides (C') of the new layer of outer leaves,
- these sides (C') are severed and they are detached from the heart (B₂).

9. Method as claimed in claim 1,
**characterised in that**
the stalks (T) are cut off by cutting out the central part (B) or the heart (B₂) around the stalk.

10. Installation for preparing lettuce heads of the iceberg type with tightly packed and overlapping leaves or vegetables of a similar structure for implementing the method as claimed in any one of claims 1 to 9,
comprising supports for accommodating the lettuce heads to be prepared and conveying them through the different work stations,
**characterised in that**
it comprises
- a station (112) for cutting the base of the sides of the outer leaves, equipped with a cutter (103) in front of which the support accommodating the lettuce head is fed,
- a station (112) for cutting off the top of the outer leaves, equipped with a cutter for slicing through the top of the outer leaves,
- a removal station for removing the cut leaves, in front of which the head carried by the support is fed,
- a station for cutting off the stalk, equipped with a cutter which slices through the head (TS) around the stalk (T) in order to detach the head from it and retain the stalk.

11. Installation as claimed in claim 10,
**characterised in that**
it comprises
- a station (113) for transversely severing part (B) of the head separated from the outer leaves (FE) in order to cut off the main part (B), leaving only the heart (B2) with the pink sides on the support (101),
- a station (114) for cutting the pink sides.

12. Installation as claimed in claim 10,
**characterised in that**
it comprises an air jet device (106) for removing the cut leaves.

13. Installation as claimed in claim 10,
**characterised in that**
the cutters (103, 109) for cutting the base of the sides of the outer leaves, those (104, 105) for cutting the outer leaves and that (109) for cutting the heart (B2) are rotating discs.

14. Installation as claimed in claim 10,
**characterised in that**
the cutting stations (113, 114) are equipped with cutters (103-109) in a fixed position and the support (101) with the lettuce head rotates in front of the cutters.

15. Installation as claimed in claim 10,
**characterised in that**
the station (115) for cutting the stalk comprises a cutter (107) with a pointed blade which is controlled in translation in order to pierce the lettuce head around the stalk, and a rotary drive means causing the head to rotate relative to the cutter.

16. Installation as claimed in claim 10,
**characterised in that**
it comprises
- a carousel (100)
* fitted with elements (101, 102) distributed around the periphery for securing the heads to be prepared,
* rotating in front of the work stations (110-117) equipped with the elements (103-109) for cutting and removing the sides and leaves,
- receptacles (131-135) for
* the waste (F, C') to be discarded,
* the good parts (B1, B2, B3) to be recovered.

17. Installation as claimed in claim 10,
**characterised in that**
it has a U-shaped cutter (104a) for slicing through the outer leaves.

## Patentansprüche

1. Verfahren zur Vorbereitung von Salatköpfen mit umhüllenden und einander übergreifenden bzw. schuppenartig sich überschneidenden Blättern vom Typ "Eisberg" oder von Gemüsen analoger Struktur, **dadurch gekennzeichnet, dass**
- man die Rippen (C) der äußeren Blätter (FE) des Kopfes (TS) unten schneidet (II),
- man oben die äußeren Blätter (FE) einschneidet (III),
- man die Rippen und die Teile (F') der äußeren so abgeschnittenen Blätter (FE) löst (IV), und
- man den Strunk oder Kern (TS) abschneidet, um den mittleren zum Verspeisen geeigneten Teil (B₁, B₂, B₃) zu gewinnen.

2. Verfahren nach Anspruch 1,
**dadurch gekennzeichnet, dass**
man die äußeren Blätter (FE) oben im Wesentlichen in einer Äquatorialebene einschneidet (III, I₂).

3. Verfahren nach Anspruch 1,
**dadurch gekennzeichnet, dass**
man die äußeren Blätter (FE) oben nahe der Spitze des Kopfes (TS) einschneidet (III, I₁).

4. Verfahren nach Anspruch 1,
**dadurch gekennzeichnet, dass**
man die Rippen und die Teile der äußeren Blätter (C, F') löst (IV), indem man auf den Kopf (TS) bläst (6).

5. Verfahren nach Anspruch 1,
**dadurch gekennzeichnet, dass**
man den vorzubereitenden Kopf (TS) sich vor Schneid- (3, 4, 5, 8, 9) und Blasorganen (6) drehen lässt.

6. Verfahren nach Anspruch 5,
**dadurch gekennzeichnet, dass**
man die Basis der Rippen der äußeren Blätter (FE) schneidet und man von oben die Blätter einschneidet, indem man auf den Kopf (B) während ein und des gleichen Vorgangs bläst (6).

7. Verfahren nach Anspruch 1,
**dadurch gekennzeichnet, dass**
man die Köpfe (TS) in hängender Lage zubereitet.

8. Verfahren nach Anspruch 1,
**dadurch gekennzeichnet, dass**
nach Entfernen der Rippen (C) und der äußeren Blätter (FE) und vor dem Abschneiden des Strunks bzw. Kerns (T),
- man den Kopf schneidet, um hiervon den Hauptteil (B₁) zu lösen und eine Kalotte (B₂) um den Strunk (T) entsprechend der Basis der Rippen (C') der neuen Schicht äußerer Blätter zu belassen, und
- man diese Rippen (C') abschneidet und sie von der Kalotte (B₂) löst.

9. Verfahren nach Anspruch 1,
**dadurch gekennzeichnet, dass**
man die Strünke (T) abschneidet, indem man den mittleren Teil (B) oder die Kalotte (B₂) um den Strunk herum aushöhlt.

10. Anlage zur Vorbereitung von Salatköpfen mit umhüllenden und übereinander greifenden bzw. schuppenartig sich überschneidenden Blättern vom Typ "Eisberg" oder Gemüse analoger Struktur zur Durchführung des Verfahrens nach einem der Ansprüche 1 bis 9,
Träger umfassend, um die vorzubereitenden Salatköpfe aufzunehmen und sie an die verschiedenen Arbeitsorte zu transportieren,
**dadurch gekennzeichnet, dass** sie umfasst
- eine Schneidstation (112) für die Basis der Rippen der äußeren Blätter, ausgestattet mit einem Messer (103), vor dem der mit dem Salatkopf versehene Träger vorbeiläuft,
- eine Schneidstation (112) für das Obere der äußeren Blätter, ausgestattet mit einem Messer, um oben die äußeren Blätter einzuschneiden,
- eine Beseitigungsstation zur Entfernung der abgeschnittenen Blätter, vor denen der vom Träger getragene Kopf vorbeiläuft, und
- eine Schneidstation für den Strunk, ausgestattet mit einem Messer, der den Kopf (TS) um den Strunk (T) aushöhlt, um hiervon den Kopf zu lösen und den Strunk zurückzuhalten.

11. Anlage nach Anspruch 10,
**dadurch gekennzeichnet, dass**
sie umfasst
- eine Station (113), um quer den Teil (B) des von den äußeren Blättern (FE) getrennten Kopfes zu schneiden, derart, dass der Hauptteil (B) abgeschnitten wird und auf dem Träger (101) nur die Kalotte (B2) mit den zarten Rippen belassen wird, und
- eine Station (114) zum Schneiden der zarten bzw. leicht roten Rippen.

12. Anlage nach Anspruch 10,
**dadurch gekennzeichnet, dass**
sie eine Luftstrahlausbildung (106) umfasst, um die geschnittenen Blätter zu entfernen.

13. Anlage nach Anspruch 10,
**dadurch gekennzeichnet, dass**
die Schneidmesser (103, 109) für die Basis der Rippen der äußeren Blätter, die (104, 105) zum Schneiden der äußeren Blätter und das (109) zum Schneiden der Kalotte (B2), sich drehende Scheiben sind.

14. Anlage nach Anspruch 10,
**dadurch gekennzeichnet, dass**
die Schneidstationen (113, 114) mit feststehenden Messern (103-109) ausgestattet sind, und der Träger (101) mit dem Salatkopf sich vor den Messern dreht.

15. Anlage nach Anspruch 10,
**dadurch gekennzeichnet, dass**
die Schneidstation für den Strunk (115) ein Messer (107) mit spitzer Klinge umfasst, das in Translation gesteuert ist, um in den Salatkopf um den Strunk herum einzutauchen, und dass ein Drehantriebsmittel den Kopf bezüglich des Messers in Drehung versetzt.

16. Anlage nach Anspruch 10,
**dadurch gekennzeichnet, dass**
sie umfasst
- ein Drehkreuz (100),
• versehen mit über den Umfang verteilten Befestigungsorganen für die vorzubereitenden Köpfe (101, 102), wobei
• dieses Drehkreuz vor den Arbeitsstationen (110-117), die mit Organen zum Schneiden und zum Entfernen der Rippen und Blätter (103-109) ausgestattet sind, sich dreht,
- Aufnahmebehälter (131-135) für
• die zu entfernenden Abfälle (F, C') und
• die guten zu verwertenden Teile (B1, B2, B3).

17. Anlage nach Anspruch 10,
**dadurch gekennzeichnet, dass**
sie ein Messer (104a) zum Einschneiden oder Einritzen der äußeren Blätter in Form eines U umfasst.
